# EUROPEAN PATENT APPLICATION

(11) **EP 2 421 255 A1**
(43) Date of publication of application: **22.02.2012**
(21) Application number: 10764626.7
(22) Date of filing: 13.04.2010
(51) Int. Cl.: H04N 5/65

(54) **DATA SECURITY SCREEN AND A PRODUCTION METHOD FOR THE SAME**

(30) Priority: 16.04.2009 KR 20090033156; 12.04.2010 KR 20100033380
(71) Applicant: Awak Inc., Songpa-gu, Seoul 138-827 (KR)
(72) Inventor: KIM, Eun Sung, Seoul 138-830 (KR)
(74) Representative: Charles, Glyndwr
(86) International application number: PCT/KR2010/002259
(87) International publication number: WO 2010/120087

(57) **Abstract**

The present invention relates to a security screen and a manufacturing method thereof. The security screen comprises: a first film layer; and a blind layer in which shielding partition walls for blocking input images are repeatedly arranged at a distance from each other in parallel or in a lattice configuration at a predetermined angle. The shielding partition walls are constituted by repeatedly printing or transferring a light-absorbing color ink onto one or both surfaces of the first film layer. The security screen is fitted to the displays of image devices such as computer monitors, cash dispensers, navigation devices, mobile phones and PDAs or is fitted to the glass of buildings or the like, thereby making it impossible for the image being output on the display to be viewed by any third party positioned on the left, right, above or below who is not the user of the image device, and which makes the image clearer by preventing the phenomenon of blurring and the phenomenon of glare which occur, for example, when external light shines on devices and on glass or the like.

## Description

### Technical Field

The present invention relates to a data security screen which makes it impossible to see the image on a display or the like at angles other than from the front of the display or at specific angles.

Recently, the rapid spread of personal computers and the construction of computer networks have facilitated the business of individuals and companies. Specifically, when the user inputs information using an input device such as a keyboard or a mouse, the output appears on the monitor. Thus, business activities, including preparing personal documents, taking out books from a library, lending and borrowing money from ATM(Automated Teller Machine) at banks or banking institutions, or performing various operations using mobile phones or PDA devices, have become more convenient.

However, the important information or data of companies, public institutions and individuals can be revealed to surrounding persons when various imaging devices such as mobile phones, ATM machines or PDA devices are operated or when a PIN(Personal Identification Number) is input into an ATM machine in order to take out or borrow money or when various operations are performed using mobile phones.

Also, just as the glass windows of a building or the like increases the light and offers views, the need to protect the private life while ensuring lighting and views is increasing.

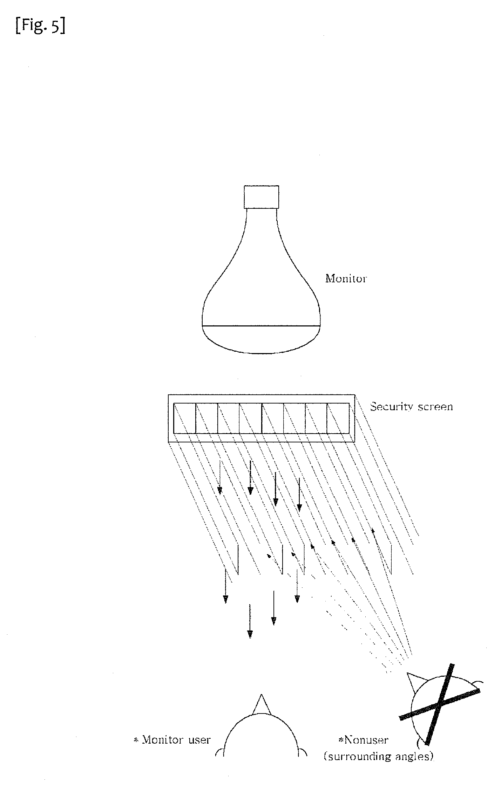

Thus, as shown in FIG. 5, a data security screen needs to be used so that the image on a display is easily visible to the user, but is not visible to surrounding persons.

Also, this need is also true of various display devices provided with various displays, in addition to the above-mentioned devices.

### Background Art

A process of manufacturing security films according to the prior art comprises applying a nontransparent adhesive pigment to a plurality of transparent films to bond the films with each other and then cutting the films. Thus, there is an inevitable increase in the amount of materials and the number of processes, reducing the productivity of the security film and increasing the cost of the product. In addition, in the process of applying the nontransparent adhesive pigment to the transparent films, alternating them with each other when laying them, and cutting the deposited films, it is very difficult to ensure the uniformity and clearness of the product.

Among conventional methods for manufacturing security films, a method of forming irregular lattices on films using a mold has the problem of the mold and related devices necessarily being very expensive, thus increasing the prices of the product. Also, because irregular lattices are formed on the film having weak physical properties by heat and pressure using the mold, the film cracks and bends so that the clearness and quality thereof are reduced, and also it is very difficult to ensure the function of blocking an image such that the image is invisible from the side.

### Detailed Explanation of the Invention

### Technical Task

Therefore, it is an object of the present invention to provide a security screen which makes it impossible to see the images on a display (including computer monitors, mobile phone displays, ATM displays, PDA displays, building glass, etc.) at angles other than the front of the display or at a specific angle set according to the intended use and characteristics of the security screen.

### Solution to the Task

To achieve the above object, the present invention provides a security screen comprising: a first film layer; and a blind layer in which shielding partition walls serving to block an input image are arranged repeatedly at a distance from each other in parallel or in a lattice configuration while making a specific angle with the surface of the first film layer, the shielding partition walls being formed by printing or transferring a light-absorbing color ink one or more times onto one or both surfaces of the first film layer.

Herein, the shielding partition walls have a width of 5-100 µm, a height of 10-250 µm and an interval of 20-185 µm therebetween, in which the width, height and interval of the shielding partition walls may be determined according to the optical properties of the security screen.

The security screen may further comprise: a second film layer attached to the blind layer to reinforce the first film layer; or a third film layer attached to the surface opposite the blind layer-forming surface of the first film layer to reinforce the first film layer.

The security screen according to the present invention may further comprise a polarizing film which is laminated directly to the image output surface of the security screen or disposed at a distance from the image output surface by an attachment means.

The first, second or third film layer or the polarizing film is made of a material satisfying the materials, specifications and component requirements of the security screen and is made of one or more selected from the group consisting of polypropylene oxide, polyisocynate, hydroxyethyl, polyvinylchloride(PVC), polyethylene terephthalate(PET), monoacrylate, polyacrylate, polymethyl methacrylate, polyurethane, polycarbonate(PC), polyethylene methacrylate, polypropylene, cellulose acetate butylate (CAB), ethylene vinyl acetate(EVA), polyvinyl alcohol (PVA), acrylate, propylene oxide, acrylic resin, or copolymers thereof, or glass, which have suitable resistance to temperature, deformation, pressure, humidity, discoloration and the like, which are used in the manufacture of the security screen. Particularly, highly elastic materials such as polyurethane may advantageously protect computer monitors, mobile phone liquid crystal displays, ATM machine displays, the glass of buildings and the like from eternal impacts and scratching.

The thickness of the film may be in the range of 10-2000 µm depending on the width and height of the shielding partition walls.

The shielding partition walls forming the blind layer may be formed such that they are printed or transferred repeatedly onto both sides of the first film layer at the same position so as to overlap with each other or such that the shielding partition walls in the blind layer formed by repeatedly printing or transferring color ink onto one or both sides of the second film layer overlap with the shielding partition walls of the blind layer formed on the first film layer.

The security screen according to the present invention may further comprise a protective film(liner) for preventing damage to each film of the security screen.

The shielding partition walls 15-1 or 25-1 preferably have high light-absorbing ability so that sufficient blocking properties can be ensured. The shielding partition walls may be made of a color ink capable of blocking images, such as UV ink or solvent-type ink, but is preferably made of UV ink which cures rapidly.

Meanwhile, the color ink forming the shielding partition walls includes a pigment and a resin and may selectively include a solvent, a polymerization initiator, a viscosity improver, an antioxidant improver, a wetting aid, a dispersing agent, a polymerization inhibitor, a sensitizer, etc.

Herein, the pigment may be an organic or inorganic pigment or a dye. The organic pigment may be used to form high-concentration barriers, and the inorganic pigment may be used to form a low-concentration barrier. Particularly, when a mixture of a high-concentration pigment having high light-absorbing ability with a low-concentration pigment having low light-absorbing ability capable of preventing scattered reflection is used, a distorted image can be blocked by the security screen and a clear image provided. Herein, the color ink preferably has a particle size ranging from about 2 nm to 18 µm.

Also, preferred examples of the resin include polypropylene oxide, polyethylene, polypropylene, ethylene vinyl acetate(EVA), polyvinyl alcohol(PVA), polyvinyl chloride(PVC), polyethylene terephthalate(PET), cellulose acetate butyrate(CAB), monoacrylate, polyacrylate, polymethyl methacrylate, polyurethane, polycarbonate, propylene oxide, polyisocynate, hydroxyethyl acrylate, hydroxyethyl methacrylate, or copolymers thereof.

The security screen according to the present invention may comprise one or more selected from the group consisting of an anti-reflection coating layer, an anti-static coating layer, an anti-radiation coating layer, a UV blocking coating layer, an anti-scratch coating layer, a neutral density filter coating layer, and a line polarizer layer. Alternatively, one or more layers of the security screen may comprise one or more components selected from components having an anti-reflection function, anti-static function, anti-radiation function, UV blocking function, anti-scratch function, clearness improving function, or line polarizer function.

Also, one surface of the first, second or third film layer or the polarizing film, an image-displaying layer having the characters, logos or letters desired to be seen at angles(the upper, lower, left and right positions of the security screen) at which the display is not visible may be formed. Alternatively the image-displaying layer may be formed such that it is not visible when viewed from the front of the user and is clearly visible when viewed from the upper, lower, left and right sides of the user.

The security screen according to the present invention may further comprise an attachment means for attaching the security screen to a display in an attachable and detachable manner.

The present invention also provides a method for manufacturing a security screen, the method comprising the steps of: preparing a first film layer; and repeatedly printing a light-absorbing color ink onto one or both surfaces of the first film layer to form a blind layer such that shielding partition walls are arranged repeatedly at a distance from each other in parallel or in a lattice configuration while making a specific angle with the surface of the first film layer.

The printing step of the method according to the present invention comprises the steps of: preparing a plate making film for printing the shielding partition walls ; preparing a printing plate using the plate making film; and printing the shielding partition walls on one or both surfaces of the first film layer using the printing plate so as to form the blind layer.

The printing plate may be a "one-stop roll-to-roll" printing plate, an electronic printing plate, a fine printing plate, a PCB screening plate, an offset printing plate, a gravure printing plate, a roll printing plate, a UV printing plate, a flat printing plate, a rotary screen printing plate, a roller printing plate for displays, and the printing may be performed using a fine precision UV coating process, a one-stop roll-to-roll printing process, an electronic printing process, a fine printing process, a flat screen coating process, a roll screen printing process, a PCB screen printing process, an offset printing process, a gravure printing process or a roller printing process.

In the electronic printing process and the fine printing process, the pigment may be applied directly to the film using a fine coating nozzle, whereby the adhesion of the pigment to the film may be increased, the pigment injected from the nozzle can adhere to the film surface without spreading out, thereby achieving ultrafine patterns.

The printing process for forming the shielding partition walls is preferably carried out under the conditions of room temperature of 10∼35 °C, a humidity of 15∼65% and a relative humidity of 20∼70%, depending on the properties of the materials used.

The method of manufacturing the security screen according to the present invention may further comprise forming a primer coating on the film to increase the surface tension of the film.

To do so, the film may be coated by anchor coating with a primer coating material based on liquid urethane resin or silica to increase the surface tension, or the surface tension of the film may be increased by surface-modifying it using plasma treatment.

The primer coating material has low viscosity and is prepared by mixing 10∼60 wt% of a resin based on urethane and silica with 90∼40 wt% of a solvent, such as bimethyl fonnamide(BMF), methyl ethyl ketone(MEK) or toluene, the amount of resin used being determined depending on the material and surface tension of the substrate film, dissolving the mixture, stirring the solution in a reactor connected with a pump, a motor and a cooler at a temperature of 10∼30°C under required pressure, and then aging the stirred solution for 3∼5 hours.

The primer coating process may be carried out using a flat silk screen coating process, a "one-stop roll-to-roll" coating process, a spray coating process, a gravure coating process, a UV coating process, or a roller coating process. The primer coating material may be coated thinly using a roller coating process or a dipping process so as to increase the surface tension of the film.

The primer coating layer may be formed on a portion or the entirety of the film and may be a mixture of resin and a solvent mixed at a mixing ratio of 15∼85%: 85∼15% depending on the desired strength of the primer coating layer.

The method for manufacturing the security screen according to the present invention may comprise the steps of: laminating at least one of a second film layer, a third film layer, a polarizing film and a protective film on the first film layer; drying and curing the formed layer; cooling the dried and cured layer; and subjecting the cooled layer to a Thomson and cutting process.

In the laminating step, one or more selected from the group consisting of an anti-reflection coating layer, an anti-static coating layer, an anti-radiation coating layer, a UV blocking coating layer, an anti-scratch layer, a neutral density filter coating layer and a line polarizer layer may further be formed.

The light-absorbing color ink which is used in the method of the present invention may further comprise one or more components selected from among components having an anti-reflection function, an anti-static function, anti-radiation function, a UV blocking function, an anti-scratch function, a clearness improving function, and a line polarizer function.

Also, the method of the present invention may further comprise a step of simultaneously or sequentially coating two or more components selected from among components having an anti-reflection function, an anti-static function, anti-radiation function, a UV blocking function, an anti-scratch function, a clearness improving function, and a line polarizer function.

The method of the present invention may further comprise the steps of: repeatedly printing a light-absorbing color ink onto the surface of the second film layer to form a blind layer such that shielding partition walls blocking an input image are arranged repeatedly at a distance from each other in parallel or in a lattice configuration while making a specific angle with the surface of the second film layer; and laminating the blind layer of the second film layer on the blind layer of the first layer such that the shielding partition walls of the second layer overlap with the shielding partition walls of the first layer.

The present invention also provides a method for manufacturing a security screen, the method comprising the steps of: preparing a plate making film for printing shielding partition walls that block an input image; preparing a printing plate using the plate making film; printing shielding partition walls on a carrier sheet using the printing plate; placing on one or both surfaces of a first film layer the shielding partition walls formed on the carrier sheet, and heating and pressing the first film layer and the carrier sheet to transfer the shielding partition walls to the surface of the first film layer, thereby forming a blind layer.

The above method may further comprise the steps of: providing a second film layer; transferring shielding partition walls made of a light-absorbing ink to one or both surfaces of the second film layer in the same pattern as the shielding partition walls formed on the first film layer, thus forming a blind layer on the second film layer; and laminating the blind layer of the second film layer on the blind layer of the first layer such that the shielding partition walls of the second layer overlap with the shielding partition walls of the first layer.

### Effects of the Invention

According to the present invention, a security screen is provided which makes it impossible to see an image from the horizontal and vertical directions. In addition, the security screen comprises a polarizing film having useful functions. Also, the security screen comprises an image-displaying layer such that advertizing images are visible from the upper, lower, left and right sides of the user. Moreover, various useful layers are added to the security screen to improve optical quality, thus providing a clearer image. In addition, a pressing and heating process is used to cut the security screen, thus improving the quality of the security screen. If necessary, primer coating, polishing, cooling, drying and curing processes are used to diversify the security screen.

In addition, the large-area fine pattern high-speed printing and homogenization technology is applied to the printing or transfer process of forming the blind layer of the security screen of the present invention, whereby a high-aspect-ratio fine pattern can be printed or transferred. Also, a pigment is printed or transferred directly onto a printed film or a film to be printed, whereby the adhesion of the pigment to the film can be increased, while the pigment can be attached to the film surface without spreading out, thereby realizing a ultrafine pattern, and the process can be simplified to reduce the production time, thus reducing the production cost.

### Brief Explanation of the Drawings

FIG. 1 is a cross-sectional view showing the structure of a security screen according to one embodiment of the present invention.
FIG. 2 is a cross-sectional view showing the structures of security screens according to other embodiments of the present invention.
FIG. 3 is a top view showing the parallel or lattice arrangement of shielding partition walls.
FIG. 4 is a perspective view showing a security screen according to one embodiment of the present invention in the state of being used.
FIG. 5 is a perspective view showing the principle behind the function and operation of a security screen according to the present invention.
FIG. 6 illustrates a method for manufacturing a security screen according to one embodiment of the present invention.
FIG. 7 illustrates a method for manufacturing a security screen according to another embodiment of the present invention.
FIG. 8 illustrates the operation of the shielding partition walls in a security screen according to the present invention.

### Best Mode of Working of the Invention

Hereinafter, each embodiment of the present invention will be described in detail with reference to the accompanying drawings in which like reference numerals denote like elements.

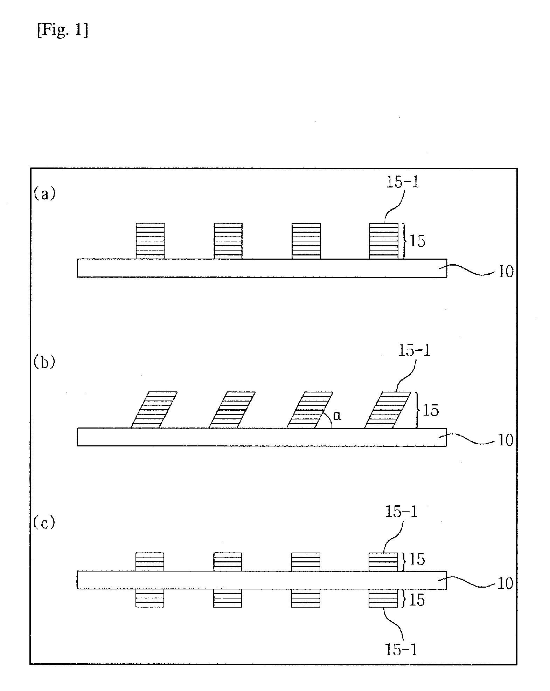

As shown in FIG. 1a, a security screen 1 according to an embodiment of the present invention comprises a first film layer 10 and a blind layer 15 comprising a plurality of shielding partition walls 15-1. The shielding partition walls 15-1 are made of a light-absorbing color ink and may be formed to have a height suitable for the intended use by repeatedly printing or transferring the color ink to the same position in the same pattern.

In the security screen of the present invention, the shielding partition walls 15-1 may be formed perpendicularly to the surface of the first film layer 10 as shown in FIG. 1a or formed so as to make a given angle (α) with the surface of the first film 10 as shown in FIG. 1b, whereby the monitor is visible only from the front side or only from a given angle determined depending on the intended use or the characteristics of the device.

The shielding partition walls 15-1 may be arranged in parallel at an interval in the horizontal, vertical or diagonal direction or arranged in a lattice configuration in a vertical or horizontal direction while making a given angle with the surface of the film layer.

Herein, the width, height and distance of the shielding partition walls 15-1 can be established and adjusted in combination and can be formed in various lattice configurations at various angles in various directions.

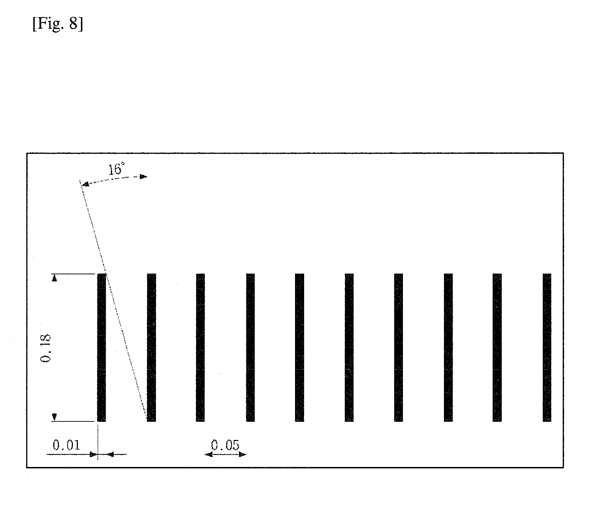

For example, as shown in FIG. 8, when the shielding partition walls are formed to have a width of 10 µm, an interval of 50 µm and a height of 180 µm, they may have a theoretical viewing angle of 16° if the shielding partition walls have a light shielding ratio of 100%. However, if the shielding partition walls do not completely shield light, the viewing angle can become wider.

The shielding partition walls 15-1 are formed on the surface of the first film layer 10 by printing or transferring color ink(e.g., a blend of a color pigment and transparent UV resin). The shielding partition walls 15-1 may be transferred onto one or both surfaces of the first film layer 10. Where the shielding partition walls 15-1 are transferred on both surfaces of the first film layer 10 as shown in FIG. 1c, the shielding partition walls are formed at the same position on the first film layer 10 so that they overlap with each other, whereby the height thereof is increased. If the shielding partition walls are formed on both surfaces as shown in FIG. 1c, the height of the shielding partition walls on each surface can be decreased, and thus if the shielding partition walls are formed using a printing or transfer process, the problem of the shielding partition walls collapsing can be prevented while the function of the security screen is maintained intact.

The space between the shielding partition walls 15-1 printed on one or both surfaces of the first film layer 10 may remain empty or may be filled with a transparent material. If the space is filled with the transparent material, transparent ink can be printed or transferred into the space.

The shielding partition walls 15-1 or 25-1 formed on one or both surfaces of the first film layer 10 or the second film layer 20 are cured after printing or being transferred, and the shielding partition walls are imparted with adhesive properties due to the color ink used to form them, so that the films can be laminated on each other even by a minimal amount of pressure. Thus, in the process of laminating the film layer with other film layers, the phenomenon in which the shielding partition walls 15-1 or 25-1 are deformed or collapse does not present itself. Also, if transparent portions 15-2 or 25-2 are formed between the shielding partition walls by printing or transferring a transparent pigment(general ink or UV pigment) in the same manner as forming the shielding partition walls, the deformation of the shielding partition walls can be further minimized.

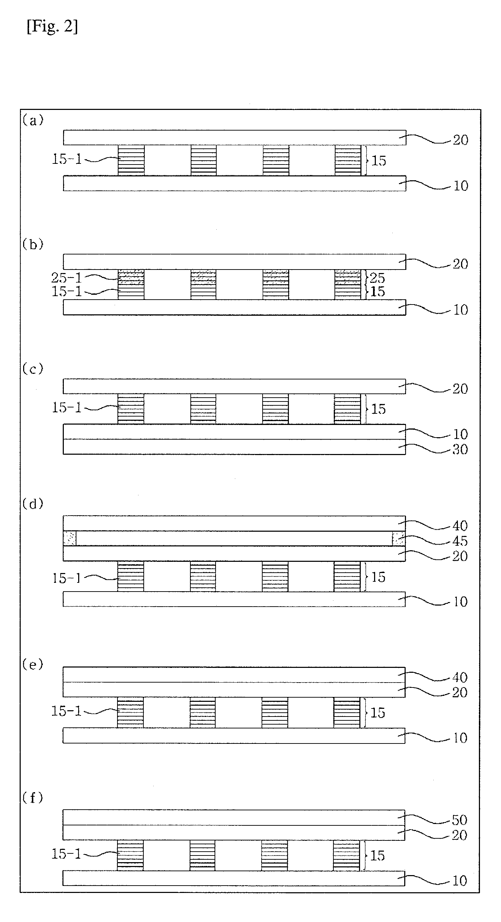

A second film layer 20, a third film layer 30 or a polarizing film 40 can be provided on the blind layer-forming surface and other surface of the first film layer 10 by thermal lamination. As shown in FIG. 2a, the security screen according to the present invention may further comprise a second film layer 20 which is attached to the blind layer 15 to reinforce the first film layer 10. For attachment of the second film layer 20, an adhesive layer may further be provided between the blind layer 15 and the second film layer 20.

According to one embodiment of the present invention, the blind layer comprising the plurality of shielding partition walls may be formed on each surface of either or both of the first film layer 10 and the second film layer 20. When the blind layer is formed on each layer of both the layers, the shielding partition walls 15-1 formed on the first film layer 10 and the shielding partition walls 25-1 formed on the second film layer 20 overlap with each other, thus facilitating the printing process. Herein, the blind layer 15 on the first film layer and the blind layer 25 on the second film layer should be repeatedly printed or transferred in the same pattern (see FIG. 2b).

Also, the security screen according to the present invention may further comprise a third film layer 30 which is attached to the surface opposite the blind layer-forming layer of the first film layer 10 to reinforce the first film layer 10. To attach the third film layer 30, an adhesive can further be provided between the first film layer 10 and the third film layer 30 (see FIG. 2c).

The security screen according to the present invention may further comprise a polarizing film 40 which is laminated directly on the image output surface of the first film layer 10, the second film layer 20 or the third film layer 30 or disposed at a distance from the image output surface by an attachment means 45 (see FIGS. 2d and 2e). The polarizing film 40 serves as a polarizer which diffuses the image transmitted through the blind layer and ensures that an image which was not transmitted through the shielding partition walls is blocked. If necessary, the security screen may also be provided with another polarizer function and may have the functions of light reflection and refraction, light linearity, reflection's law, total reflection and diffusion of light, light polarization, surface antireflection, nonpolarized light-to-linearly polarized light conversion, etc., depending on the intended use thereof.

In a process of forming an image-displaying layer 50 which is visible from the left, right, upper and lower sides surrounding the user of the security screen, the image displaying layer may be formed on any one of the first film layer, the second layer, the third film layer and the polarizer layer with a desired pigment in the same manner as the process of forming the blind layer, in which the image displaying layer is invisible from the front side of the security screen but is visible from the upper, lower, left and right sides (FIG. 2f).

Specifically, the image-displaying layer 50 can be formed by printing or transferring a desired pigment (corresponding to an image to be displayed) onto any one of the first film layer 10, the second film layer 20, the third film layer 30 and the polarizing film 40.

For example, in the process of forming the image-displaying layer 50, a transfer layer is produced on a carrier sheet (e.g., paper), after which the produced transfer layer is placed on the surface of the first film layer 10, the second film layer 20, the third film layer 30 or the polarizing film 40, and then suitable temperature and pressure are applied to the back side of the carrier sheet using a heat transfer machine, whereby the image displaying layer 50 can be formed.

Where the image-displaying layer is formed on the blind layer 15, logos or letters to be displayed are printed or transferred onto on a portion of the shielding partition walls of the blind layer 15 using an ink whose color is different from the of the shielding partition walls during formation of the shielding partition walls, whereby the image-displaying layer can be formed. In this case, the image-displaying layer is not visible from the front side of the security screen, but is visible from the left, right, upper and lower sides due to the printed color.

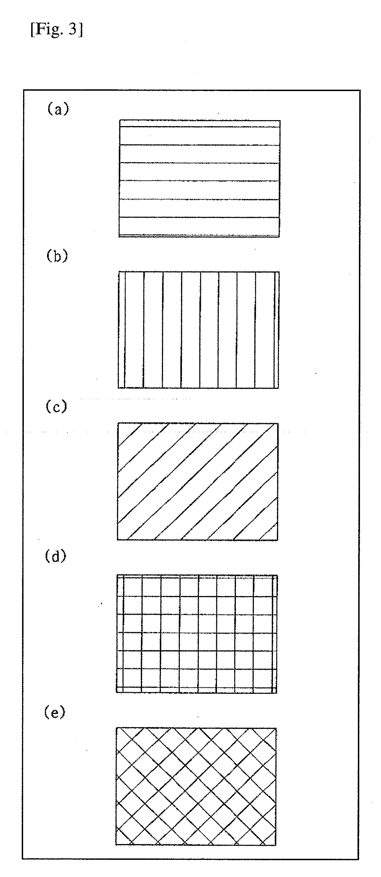

Also, in the blind layer 15 or 25 of the security screen according to the present invention, shielding partition walls blocking input images are repeatedly arranged at a distance in a lattice configuration in parallel or at an angle. Where the shielding partition walls 15-1 or 25-1 are formed in parallel in a horizontal direction as shown in FIG. 3a, the image is not visible in the vertical direction of the monitor. Where the shielding partition walls 15-1 or 25-1 are formed in parallel in a vertical direction as shown in FIG. 3b, the image is not visible in the horizontal direction. In addition, in order to prevent them from being viewed from a specific angle, such as 45°, 60° or 75°, the shielding partition walls 15-1 or 25-1 may also be formed in parallel at a given angle.

In addition, the shielding partition walls 15-1 or 25-1 may be arranged in a lattice configuration at a given angle. As shown in FIG. 3d, the shielding partition walls may be arranged in a lattice configuration in the horizontal and vertical directions at an angle of 90°, and as shown in FIG. 3e, the shielding partition walls may also be arranged in a lattice configuration at an inclined angle.

As shown in FIGs. 3a, 3b and 3c, if the printing or transfer process is carried out such that the shielding partition walls 15-1 are arranged in parallel, the image on a monitor M cannot be easily viewed at angles other than the front side as shown in FIG. 5. Also, if the shielding partition walls have a lattice configuration as shown in FIGS. 3d and 3e, the image cannot be easily viewed at angles other than the front side.

As described above, due to the blind layer 15 or 25 formed on the first film layer 10 or the second film layer 20, the image of the monitor(M) is clearly visible from the front side without spreading out or being distorted. However, when the image of the monitor(M) is viewed at an inclined angle from the positions surrounding the monitor, that is, the upper, lower, left and right sides, the image is not visible because it is blocked by the shielding partition walls as shown in FIG. 5.

The construction of the present invention as described above will now be described in further detail.

First, for the first, second and third film layers and the polarizing film sheet which are used to manufacture the security screen of the present invention, materials having the specifications and components required for the manufacture of the security screen are selected and prepared. Herein, the thickness of each of the films is generally in the range of 10-2,000 µm, even though it varies depending on the intended use of the security screen.

Also, each of the films is preferably made of one or more selected from among polypropylene oxide, polyisocynate, hydroxyethyl, polyvinylchloride(PVC), polyethylene terephthalate(PET), monoacrylate, polyacrylate, polymethyl methacrylate, polyurethane, polycarbonate, polyethylene methacrylate, polypropylene, cellulose acetate butylate(CAB), ethylene vinyl acetate(EVA), polyvinyl alcohol(PVA), acrylate, propylene oxide, acrylic resin, or copolymers thereof, or glass, which have suitable resistance to temperature, deformation, pressure, humidity, discoloration and the like, which are used in the manufacture of the security screen.

Meanwhile, among the materials of the first, second and third film layers and the polarizing film, highly elastic materials such as urethane advantageously protect computer monitors, mobile phone liquid crystal displays, ATM machine displays, the glass of buildings and the like from eternal impacts and scratching.

In the present invention, the shielding partition walls 15-1 or 25-1 preferably have high light-absorbing ability such that they can ensure sufficient blocking properties. The shielding partition walls may be made of color UV ink or solvent-type ink capable of blocking images, but are preferably made of UV ink which cures rapidly.

Meanwhile, the color ink forming the shielding partition walls may selectively include a solvent containing a pigment and resin, a polymerization initiator, a viscosity improver, an antioxidant, a wetting aid, a dispersing agent, a polymerization inhibitor, a sensitizing agent and the like.

Herein, the pigment used may be an organic or inorganic pigment or a dye. The organic pigment may be used to form high-concentration barriers, and the inorganic pigment may be used to form low-concentration barriers. Particularly, when a mixture of a high-concentration pigment having high light-absorbing ability and a low-concentration pigment having low light-absorbing ability is used, it can block the distorted image from the security film, thus providing a clear image. Depending on the intended use of the product, the high-absorption pigment and the low-absorption pigment may be used alone or in a mixture. Herein, the color ink preferably has a particle size of about 2 nm-18 µm.

Also, preferred examples of the resin include polypropylene oxide, polyethylene, polypropylene, ethylene vinyl acetate(EVA), polyvinyl acetate(PVA), polyvinyl chloride(PVC), polyethylene terephthalate(PET), cellulose acetate butylate(CAB), monoacrylate, polyacrylate, polymethyl methacrylate, polyurethane, polycarbonate, propylene oxide, polyisocynate, hydroxyethyl acrylate, hydroxyethyl methacrylate, or copolymers thereof.

Also, the color ink may also be used to form the image-displaying layer having various logos, characters and images, which are not visible from the front of the user of the security screen and is clearly visible from the side of the user.

The security screen according to the present invention may further comprise a protective film(liner) in order to prevent damage to each of the film layers forming the security screen. In this case, the protective film which is formed on one or both surfaces of the first, second or third film layer or the polarizing film is preferably made of one selected from among PP(polypropylene), PET, OPP(oriented polypropylene) and PVC and is coated with PE to a thickness of 2∼30 µm.

In the processes of applying the main coating materials, including the process of printing ink for forming the shielding partition walls of the security screen according to the present invention, the process of printing ink for forming the image-displaying layer, the process of applying the adhesive for laminating the films, and the process of applying the adhesive for providing the attachment means, a primer coating is not required when general purpose materials and components are used. However, when materials and components for special purposes are used, the pigment and adhesive used can be separated and removed from the films to which they were applied, and for this reason, a primer coating process may be carried out before the processes of applying the main coating materials, in order to prevent the pigment from being separated and removed from the films and to deposit fine particles of each coating material on the film surface, regardless of the kind and chemical composition of the film and coating material.

For this purpose, a primer coating material based on liquid urethane resin or silica may be coated by anchor coating on the substrate film to increase the surface tension of the substrate film. Alternatively, the surface of the substrate film may be modified by plasma treatment to increase the surface tension of the substrate film.

The primer coating material is generally applied to the film in which the main coating material is not stabilized due to the properties, components and surface conditions of the film. Films such as PET and PVC films are prepared using resin, a stabilizer, a plasticizer, a non-migratory plasticizer and the like. The primer coating material serves to maintain the function of the main coating material for a long period of time by preventing the phenomenon in which the stabilizer, the plasticizer and the like used to prepare the film leak to the surface of the films, such as PET, PVC and acrylic films, that is, the phenomenon wherein the plasticizer and the stabilizer form materials like white pollen on the surface of the film or leak to the surface in the form of an oily liquid that exfoliates the main coating material from the film surface or that exfoliates the main coating material from the film having low surface tension.

This primer coating material is prepared by mixing 10∼60 wt% of a resin based on urethane and silica with 90∼40 wt% of a solvent, such as bimethyl formamide(BMF), methyl ethyl ketone(MEK) or toluene, the amount of resin used being determined depending on the material and surface tension of the substrate film, dissolving the mixture, stirring the solution in a reactor connected with a pump, a motor and a cooler at a temperature of 10∼30 °C under required pressure, and then aging the stirred solution for 3∼5 hours. The prepared primer coating solution has low viscosity.

Meanwhile, in the process of the adhesive which is used in the present invention, the adhesive layer 20 which is used to laminate the first, second and third films and the polarizing film with each other is prepared by mixing a hot melt copolymer, such as an ethylene vinylacetate(EVA) copolymer, polyamide, polyester or polyurethane, rubber and resin such as rosin, ester gum, terphene resin or coumarone resin, a wax such as paraffin or microcrystalline wax, a plasticizer such as DBP(dibuthyl phthalate), chlorodiphenyl or chloroparaffin, a filler such as calcium carbonate, barium oxide, talc or kaolin, an antioxidant such as p-alkylphenyl, and a solvent, the solvent being used an amount of 5∼95 wt% depending on the adhesive strength and viscosity of the product, dissolving the mixture, stirring the solution in a reactor connected with a pump, a motor and a cooler at a temperature of 15∼105 °C under the required pressure, and aging the stirred mixture for 12∼15 hours.

The adhesive used is preferably a hot-melt adhesive or an emulsion-type acrylic adhesive having conformability to the substrate film and curling properties.

The adhesive 100 which is used to attach the security screen to a monitor is an acrylic copolymer and is prepared by mixing a monomer such as an ethylhexyl acrylate monomer, a butylacrylate monomer, an ethylacrylate monomer, ethylacetate, methyl methacrylate or acrylic acid with a solvent, each of the monomer and the solvent being used in an amount of 10∼90 wt% depending on the adhesive strength and viscosity of the product, dissolving the mixture, stirring the solution in a reactor connected with a pump, a motor and a cooler at a temperature of 25∼125 °C under the required pressure, and then aging the stirred solution. The prepared acrylic adhesive is coated on the security screen such that repeatedly attaching the security screen to and from a display is easy.

The security screen according to the present invention may further comprise one or more layers selected from the group consisting of an anti-reflection coating layer, an anti-static coating layer, an anti-radiation coating layer, a UV-blocking coating layer, an anti-scratch coating layer, a neutral density filter coating layer, and a line polarizer coating layer.

The anti-reflection coating can serve to reduce the reflection of external light or indoor illumination light, thus prevent glaring, and the anti-static coating layer may be formed by coating a synthetic resin containing a conductive polymer and a metal or an antistatic thin film on one surface of the first, second or third film layer or the polarizing film and can prevent static electricity.

The anti-scratch coating layer may be formed on the innermost or outermost layer of the security screen to prevent the security screen from being scratched and damaged and to protect the security screen from external chemical damage.

Meanwhile, the anti-scratch coating layer serves as a low-gloss coating layer to prevent the reflection of external light on the security screen.

The UV-blocking coating layer can serve to block UV light and electromagnetic waves harmful to the human body and can be formed by applying a mixture of fine metal particles, fine carbon paste and a solvent to one surface of the first, second, third film layer or the polarizing film such that the optical properties of the security screen are not impaired, thereby imparting an electromagnetic wave shielding function to the security screen.

The neutral density filter coating layer can serve to increase the clearness of an image and the strength of the film and to block various harmful lights emitted from a monitor and also to control visible light and infrared light, thereby providing a clear and soft image.

Hereinafter, the process of manufacturing the security screen according to the present invention will be described in further detail.

First, a drawing which is used to make shielding partition walls is prepared in the following manner. Using the fine pattern design and manufacture technology for the security screen of the present invention, shielding partition walls are set to have the following specifications depending on the intended use of the security screen: width of the shielding partition wall : 5∼100 µm; height of the shielding partition wall : 10∼250 µm; interval between shielding partition walls : 20∼185 µm. The width, height and interval of the shielding partition walls are controlled so as to satisfy the optical properties of the security. By preparing such a drawing, the shielding partition walls can be formed such that they are arranged at a distance from each other in parallel in the horizontal direction or the horizontal and vertical directions while making a given angle with the film layer.

A plate making film which is used to form shielding partition walls can be printed using a highly functional printer on the basis of the drawing under conditions of a resolution of 20,000 dpi or more and a dot line number of 400 line or more.

A printing plate which is used to print shielding partition walls can be manufactured using the plate making film based on the following specifications of the shielding partition walls shown on the drawing: width of shielding partition wall : 5∼100 µm; height of shielding partition wall : 10∼250 µm; interval between shielding partition walls : 20∼185 µm. The width, height and interval of the shielding partition walls are controlled so as to satisfy the optical properties of the security screen. The printing plate for forming shielding partition walls satisfies the specifications shown on the drawing and may be one selected from among a plate for rotary screening, a roll plate, a flat plate, a roll plate for displays, a plate for fine printing, a plate for UV printing, a plate for "one-stop roll-to-roll" printing, a plate for electronic printing, a plate for fine printing processes, a plate for flat screening, a plate for roll screening, a plate for PCB screening, a plate for offset printing, and a plate for gravure printing.

In a printing process of forming shielding partition walls for forming the blind layer, fine patterns can be formed using the large-area fine pattern high-speed coating and coating homogenization technology(printing process).

In a process of applying color ink for producing shielding partition walls and adhesive properties to any one surface of the first film layer and the first film layer and the second film layer, the plate for forming shielding partition walls is placed in the ultra-precision printing machine, and color ink is introduced into the machine. Then, a printing process selected from among a fine precision printing process, a UV printing process, a "one-stop roll-to-roll" printing process, an electronic printing process, a fine precision printing process, a flat screening process, a roll screening process, a PCB screening process, an offset printing process and a gravure printing process may be carried out to form shielding partition walls having a desired color on the first film layer or the second film layer.

Meanwhile, the printing process of forming the shielding partition walls is preferably carried out under conditions of room temperature of 10∼35 °C, a humidity of about 15∼65% and a relative humidity of 20∼70%, depending on the properties of the materials used, but is not limited thereto.

Meanwhile, in the printing process, the pigment is applied directly to the film using a nozzle-type printing machine(inkjet printer), whereby the adhesion of the pigment to the film can be increased, the pigment injected from the nozzle can adhere to the film surface without spreading out, thereby achieving ultrafine patterns, and the process can be simplified to reduce production cost.

In another method, the shielding partition walls can be formed by printing the color ink onto a carrier sheet (e.g., paper or a film sheet) to form the shielding partition walls, placing the shielding partition wall side of the carrier sheet on one or both surfaces of the first film layer and/or the second film layer, applying suitable temperature and pressure to the back side of the carrier sheet using a heat-transfer machine so as to transfer the shielding partition walls of the carrier sheet to one or both surfaces of the first film layer and/or the second film layer, and then removing the carrier sheet.

In order to provide the security screen of the present invention with additional functions, including blocking various harmful waves and improving clearness, a pigment, a paste suspension or a sol, which provide such functions, may be added to the color ink for forming the shielding partition walls, which is then printed to form the blind layer.

In another method, the pigment and paste for providing the additional functions may also be added during the first, second and/or third film.

In still another method, the pigment and paste for providing the additional functions may also be printed on one surface of the first, second or third or the polarizing film.

The process of providing the functional components is preferably carried out either in the same manner as the printing process used to form the blind layer or by using a chemical method or a thin film deposition method.

Among the above printing processes, the "one-stop roll-to-roll" printing process of using a "one-stop roll-to-roll" printing machine to coat only one surface of an object may be used. Herein, upper and lower rollers are placed in the front of the machine, a liquid storage tank is placed at the side or inside of the rollers, a plate making machine comprising fine dots to achieve the required coating shape and thickness is placed outside the roller, and heat-drying and UV-curing units and a ventilation fan are placed on a duct-type conveyor connected to the plate making machine. At the lower portion of the end of the conveyor, a container into which a coating material for plates naturally drops is placed, and at the upper portion of the end, a rewinding roller on which a coating material for roll printing automatically rewinds is placed.

In the "one-stop roll-to-roll" printing process, a paste and one of a pigment and an adhesive is introduced into the liquid storage tank placed at the side or inside of the upper and lower rollers, after the film to be printed is passed through the upper and lower rollers having the printing plate placed thereon, thereby performing the printing process. Herein, the printing width and thickness may be controlled by the printing plate, or by controlling the interval between the two rollers or by controlling the distance of a knife cutter from the surface of any one of the upper and lower rollers.

The film is passed through the duct-type conveyer having the heat drying, UV curing and ventilating functions, so that it is dried and cured, after which it is collected either by a flat printing process in which it naturally drops into the container placed at the lower portion of the end of the conveyor, or by a roll printing process in which the film automatically rewinds on the rewinding roller placed at the upper portion of the end of the conveyor.

The "one-stop roll-to-roll" printing process using the "one-stop roll-to-roll" printing machine may be applied for the formation of the blind layer, the image-displaying layer, the adhesive layer and the additional functional layer in the same manner, thereby maximizing production efficiency.

The "one-stop roll-to-roll" printing process using the "one-stop roll-to-roll" printing machine has the following advantages: both sides can be coated in a one-stop operation; the formation of the blind coating layer, the primer coating layer, the adhesive layer, the image-displaying layer and the additional functional layer can be achieved in an easy manner; high coating quality and uniformity can be achieved; the drying and curing processes can be performed at the same time, and the rewinding process and the loading process can be performed at the same time; operating time can be shortened by about 1/50 using the automated system and process; the number of workers can be reduced; and, the production cost can be reduced by about 1/10.

In the process of laminating the first film layer 10 with the second film layer 20, the third film layer 30, the polarizing film 40 or the protective film, the first film layer 15 having the blind layer 15-1 formed thereon may be used intact (see FIG. 1). Alternatively, depending on the intended use of the security screen, after the shielding partition walls 15-1 or 25-1 were formed on the first or second film 10 or 20, the first and second films layer 10 and 20 may be laminated with each other by heating and pressing them to a temperature and pressure selected according to the pigment coated on the first and second films layer 10 and 20 (FIG. 2b). Also, the third film layer 30 or the polarizing film 40 may be placed on the other surface of the first film layer 10 and laminated using a heating/pressing laminating machine by one laminating process selected from among a flat laminating process, a roller laminating process or a manual laminating process which uses a press for the production of small amounts.

Alternatively, the adhesive may be applied to one surface of the first film layer 10 or the second film layer 20, after which the second film layer 20 alone may be laminated using the heating/pressing laminating machine (FIG. 2a). If necessary, the third film layer (FIG. 2c) or the polarizing film may be provided on the other surface of the first film layer 10 using an adhesive.

Namely, the second and third layers 20 and 30 or the polarizing film 40 may be provided on both surfaces of the first film layer 10.

Meanwhile, in order to protect the adhesive layer formed on the image output surface of the first, second or third film layer or the polarizing film, a release paper may be formed. Also, in order to prevent damage to the image output surface, a protective film may be provided.

The laminating process may be carried out by one laminating process selected from among a flat laminating process, a roller laminating process or a manual laminating process which uses a press for small amount production.

Also, in the process of forming the shielding partition walls on the first and/or second film layer, the coating surface of the first film layer and the coating surface of the second film layer can be laminated with each other by pressing using the adhesive component of the shielding partition walls formed of the blend of the color pigment and the transparent UV adhesive resin.

If necessary, the third film layer or the polarizing film may be laminated on the adhesive layer, provided on the other surface of the first film layer, using the heating/pressing laminating machine.

Meanwhile, the heating/pressing laminating process may be performed using a suitable temperature and time selected depending on the components and properties of the first, second and third film layers, the polarizing film, the pigment, the adhesive and the resin. Specifically, the laminating process may be performed at a temperature of 35∼280 °C and a pressure of 22∼110 MPa for 1 second to 5 minutes, while a vacuum application process may be performed to prevent the generation of bubbles, after which a forced or natural cooling process may be performed depending on the components and properties.

Also, the adhesive resin of the color ink may be partially transferred to the opposite film during the heating/pressing laminating process so as to serve as a binding member, and the components of the color ink may be partially transferred to the opposite film.

In addition, due to the temperature, pressure and time selected depending on the components and properties of the first, second and third film layers, the polarizing film, the pigment, the adhesive and the resin, the phenomenon wherein the security screen distorts an image can be eliminated, and a clearer image can be provided.

The drying and curing processes are done after the processes of coating and laminating the shielding partition walls, the image displaying layer and the adhesive agent. Herein, no special drying process is required. However, a precise drying process may be required to maintain the perfect quality of the security screen caused by the selected materials, and this drying process may be carried out using a Digital-PID(Proportional Integral Differential)-Auto Tuning temperature controlling process which ensures a highly precise temperature distribution in order to prevent the film from being deformed or damaged and to maintain high quality.

The drying process may be performed at a suitable temperature for a suitable time, the time and temperature being selected depending on the materials and components of the pigment for forming the shielding partition walls and the image-displaying layer, the adhesive for lamination, the adhesive for attaching the security screen, and the materials and components of the first, second and third film layer or the polarizing film, in order to prevent the flow, spread and scattering of the printed pigment. Specifically, UV light may be irradiated using a dryer having the rapid drying and curing function, and the curing or drying process may be carried out using various methods, including a duct conveyor drying process, a hot-air drying process, a hot-wire drying process and a heat drying process.

The drying step may be carried out at a temperature ranging from room temperature to 35∼300 °C for 1 second to 5 minutes depending on the component ratio and the surrounding temperature and humidity.

Also, each raw material component may be dissolved in a suitable solvent and coated on the film, after which the solvent may be evaporated in the drying process, whereby the raw material component may be attached to the film.

Meanwhile, when a film made of a special material is used or in order to form a coating layer having a desired thickness and to improve the adhesion of the pigment and the optical properties of the privacy screen, a UV curing agent may be used.

Herein, the UV curing agent may be added in an amount of 1∼8 wt% relative to the weight of pigment used, even though this varies slightly depending on the material and physical properties of the film.

In the case of the general purpose security screen, a polishing process need not to be carried out. However, depending on the intended use and purpose of the security screen and the components and on the materials and optical properties of the film and pigment used, a polishing process may be performed after a cooling process using a super-precise polisher or a super-precise knife under an appropriate pressure selected depending on the component and material of the film and the pigment, so that the security screen is within a desired specification.

After the drying and curing process, a cooling process may, if necessary, be carried out by a cooler and a dehumidifier using a suitable temperature and time selected for the materials and components of the first, second or third film layer, the polarizing film, the color pigment or the non-transparent pigment and the surrounding conditions (temperature, humidity, etc.). Alternatively, the cooling process may be carried by natural cooling.

Also, a Thomson and cutting process may be carried out by a highly functional Thomson machine and cutter using a suitable temperature and time selected depending on the materials and components of the film, the pigment and the adhesive, so that the privacy screen can be cut to a desired shape and specification without being cracked, damaged or bent.

When the security screen is manufactured using general materials, the Thomson and cutting process may be carried out using a general-purpose Thomson machine or cutter.

In a process of providing an attachment means for attaching the security screen, an adhesive as the attachment means is applied to one surface of the security screen, whereby the security screen can be attached to or detached from a display for a long period of time without using a separate means.

Specifically, the adhesive as the attachment means is applied to one surface of the security screen, whereby the security screen 1 can be attached directly to the display of the monitor(M). In this case, the security screen may advantageously be attached to the monitor(M) of a notebook computer or a mobile phone display, and when the display of the notebook computer or the mobile phone display is open or closed, the security screen 1 does not need to be attached to or detached from the display, and a separate means for attaching or detaching it is not required.

Herein, the solvent component of the adhesive may be an oily or aqueous solvent.

Also, after coating the surface of the security screen with an acrylic or urethane-based adhesive and carrying out a drying process to remove the solvent from the adhesive, followed by a cooling process, a process of laminating a protective film on the adhesive-coated surface of the security screen to protect the adhesive from foreign objects may be carried out.

Meanwhile, in order to facilitate the attachment and detachment of the security screen to and from an object surface and to prevent bubbles from being generated when it is being attached, the first, second or third film layer surface, the polarizing film surface or the adhesive-coated surface may be embossed.

Meanwhile, in order to prevent the adhesive material from being transferred to an object surface or being exfoliated and to maintain the adhesive property of the adhesive material, a primer coating process may be carried out on a portion to be coated with the adhesive, thereby providing an adhesive means for the security screen.

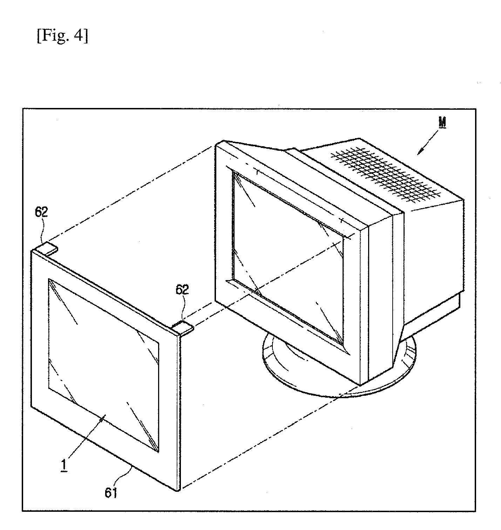

In another embodiment, as shown in FIG. 4, the attachment means may comprise a frame 61 to which the security screen is connected, and an attachment member 62 connected to one side of the frame 61 and which hangs on the monitor(M). The attachment means may be a Velcro tape or other tapes.

Meanwhile, if a stopper(not shown) is formed on the monitor(M), the attachment member 62 may have a hook shape, and the security screen may be manufactured to have the same structure and shape as those of the front side of the monitor, so that the security screen looks integral with the monitor.

In addition, the security screen 1 according to the present invention can be easily cleaned even with water and a cloth without needing a special cleaner.

Hereinafter, examples of the security screen 1 of the present invention and the manufacturing method thereof will be briefly descried with reference to the foregoing, but the following examples are provided for a better understanding of the present invention and are not intended to limit the scope of the present invention. In addition to these examples, other various examples exist.

### Working Example 1

First, the following raw and sub-materials required to manufacture the security screen of the present invention are prepared: materials for first, second and third film layers; a material for a polarizing film; a color ink for producing shielding partition walls and providing adhesive properties; a protective film (liner) for protecting the surface of the security screen and the adhesive layer; an adhesive resin; and an adhesive.

After preparing the raw and sub-materials, a drawing for producing shielding partition walls is prepared, and a plate making film for shielding partition walls is made, and is used to prepare a printing plate for printing shielding partition walls. Then, a printing process of forming a blind layer comprising shielding partition walls formed therein is carried out, and a process of forming an image-display layer visible from the upper, lower, left and right sides of the security screen is carried out. Then, various useful additional functional layers are applied or deposited on the security screen, after which a process of laminating the first film with the second or third film, the polarizing film, the protective film and the additional layers is carried out, followed by a Thomson and cutting process, thereby manufacturing the security screen of the present invention.

### Working Examples 2

In addition to the processes of Working Example 1, the process of laminating the polarizing film, the shielding partition walls and the image-displaying layer with an adhesive and an adhesive coating is carried out, after a drying and curing process is carried out, and an attachment means for attaching the security screen is provided, thereby manufacturing the security screen of the present invention.

### Working Example 3

In addition to the processes of Working Examples 1 and 2, a polishing process for the coating surface, and a cooling process following the coating, laminating, drying and curing process are carried out, thereby manufacturing the security screen of the present invention.

### Working Example 4

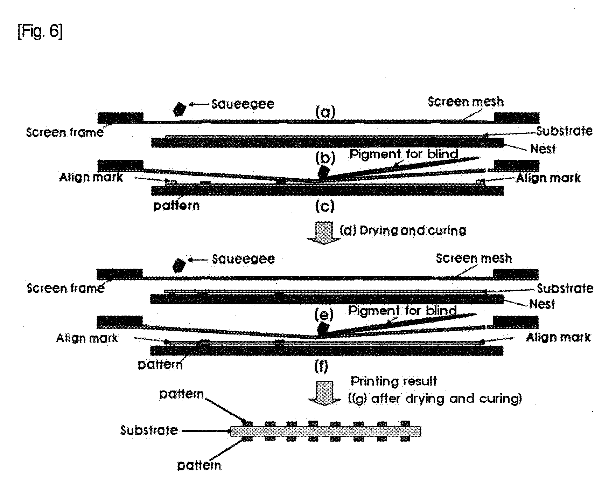

A screen mask having a given pattern is fixed to a frame, and then a plastic substrate is fixed onto a nest. A high-viscosity ink is placed on a screen mesh at a suitable position such that the ink or pigment for forming a shielding partition wall pattern can be easily applied. After the ink was applied, it is printed onto a plastic film, and the printed film is cured under suitable curing conditions. The printed film is reversed and fixed onto the nest using a precise align mark, after which the opposite surface of the film is subjected to the printing and cutting processes (see FIG. 6).

### Working Example 5

A screen mask having a given pattern is fixed to a frame, and then a plastic substrate is fixed onto a nest. A high-viscosity ink is placed on a screen mesh at a suitable position such that the ink or pigment for forming a shielding partition wall pattern can be easily applied. After the ink was applied, it is printed onto a plastic film, and the printed film is cured under suitable curing conditions.

Another plastic substrate is fixed onto a nest and then subjected to the above processes.

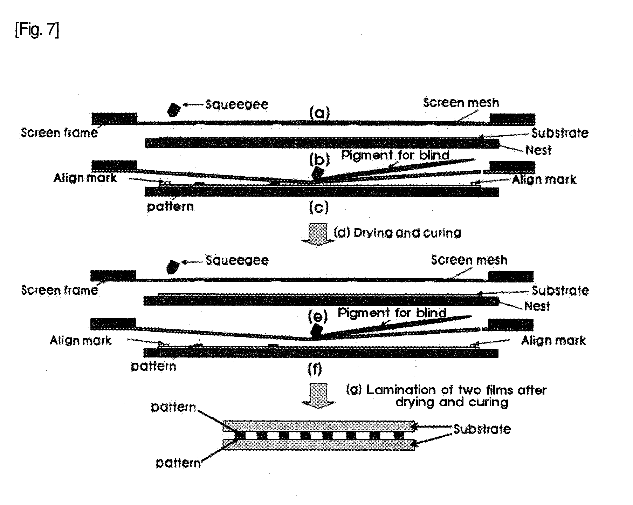

The printed films are bonded with each other using an align mark (see FIG. 7).

Through the processes described in Working Examples 4 and 5, a high-aspect-ratio pattern can be fabricated in a simple manner, and the security screen can be manufactured using various substrates(glass and plastic films) and various inks(organic and inorganic materials) for shielding partition walls.

The security screen according to the present invention can be manufactured not only by the above-described screen printing method, but also by various printing processes, including a gravure printing process, an offset(roll-to-roll or roll-to-plate) process and an inkjet printing process.

In the above examples, while it has been described that the security screen is attached to the computer monitor, it is to be understood that the security screen may be used for the displays of ATM machines, mobile phones, PDA devices and the like, and may also be applied to building's windows.

If the security screen according to the present invention is applied to the windows of a building, it will provide an additional effect of blocking UV light.

Although the preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A security screen comprising:
a first film layer; and a blind layer in which shielding partition walls serving to block an input image are arranged repeatedly at a distance from each other in parallel or in a lattice configuration while making a specific angle with the surface of the first film layer, the shielding partition walls being formed by printing or transferring a light-absorbing color ink one or more times onto one or both surfaces of the first film layer.

2. The security screen of claim 1, wherein the shielding partition walls have a width of 5∼100 µm, a height of 10-250 µm and an interval of 20∼185 µm therebetween.

3. The security screen of claim 1, wherein the blind layer is formed on both surfaces of the first film layer, in which the shielding partition walls are formed at the same position with respect to the first film layer.

4. The security screen of claim 1, further comprising a second film layer attached to the blind layer to reinforce the first film layer.

5. The security screen of claim 4, further comprising a third film layer attached to the surface opposite the blind layer-forming surface of the first film layer to reinforce the first film layer.

6. The security screen of claim 5, further comprising a polarizing film which is laminated directly to the image output surface of the security screen or disposed at a distance from the image output surface by an attachment means.

7. The security screen of any one of claims 1 to 6, wherein the first, second or third film layer or the polarizing film is made of one or more selected from the group consisting of polypropylene oxide, polyisocynate, hydroxyethyl, polyvinylchloride(PVC), polyethylene terephthalate(PET), monoacrylate, polyacrylate, polymethyl methacrylate, polyurethane, polycarbonate(PC), polyethylene methacrylate, polypropylene, cellulose acetate butylate(CAB), ethylene vinyl acetate(EVA), polyvinyl alcohol(PVA), acrylate, propylene oxide, acrylic resin, or copolymers thereof, or glass.

8. The security screen of claim 7, wherein the first, second or third film layer or the polarizing film comprises polyurethane.

9. The security screen of claim 7, wherein the first, second or third film layer or the polarizing film has a thickness of 10∼2, 000 µm depending on the width and height of the shielding partition walls.

10. The security screen of claim 1, wherein at least one of the layers further comprises an image-displaying layer which is visible the viewing angle of the user or less.

11. The security screen of claim 4, wherein the shielding partition walls of the blind layer formed by transferring the color ink onto one or both sides of the second film layer overlap with the shielding partition walls of the blind layer formed on the first film layer.

12. The security screen of claim 6, further comprising a protective film for preventing damage to each film of the security screen.

13. The security screen of claim 1, wherein the color ink comprises a pigment and a resin, in which the resin comprises one or more selected from the group consisting of polypropylene oxide, polyethylene, polypropylene, ethylene vinyl acetate(EVA), polyvinyl acetate(PVA), polyvinyl chloride(PVC), polyethylene terephthalate(PET), cellulose acetate butylate(CAB), monoacrylate, polyacrylate, polymethyl methacrylate, polyurethane, polycarbonate, propylene oxide, polyisocynate, hydroxyethyl acrylate, hydroxyethyl methacrylate, or copolymers thereof.

14. The security screen of claim 13, wherein the color ink is a UV ink.

15. The security screen of claim 13, wherein the color ink has a particle size ranging from 2 nm to 18 µm.

16. The security screen of claim 1, wherein the transferring is performed by forming the shielding partition walls on a carrier sheet and then heating and pressing the carrier sheet to the first film layer.

17. The security screen of claim 1, further comprising one or more layer selected from the group consisting of an anti-reflection coating layer, an anti-static coating layer, an anti-radiation coating layer, a UV blocking coating layer, an anti-scratch coating layer, a neutral density filter coating layer, and a line polarizer layer.

18. The security screen of claim 1, wherein one or more layers of the security screen comprises one or more components selected from components having anti-reflection function, anti-static function, anti-radiation function, UV blocking function, anti-scratch function, clearness improving function, or line polarizer function.

19. The security screen of claim 1, further comprising an attachment means for attaching the security screen to a display in an attachable and detachable manner.

20. A method for manufacturing a security screen, the method comprising the steps of:
preparing a first film layer; and
repeatedly printing a light-absorbing color ink onto one or both surface of the first film layer to form a blind layer comprising shielding partition walls that block an input image, such that the shielding partition walls are arranged repeatedly at a distance from each other in parallel or in a lattice configuration while making a specific angle with the surface of the first film layer.

21. The method of claim 20, further comprising the steps of:
preparing a second film layer; and
repeatedly printing a light-absorbing color ink onto one or both surface of the second film layer to form a blind layer comprising shielding partition walls that block an input image, such that the shielding partition walls of the second film layer are formed in the same pattern as the shielding partition walls formed on the first film layer; and
laminating the blind layer of the second film layer on the blind layer of the first layer such that the shielding partition walls of the second layer overlap with the shielding partition walls of the first layer.

22. The method of claim 20 or 21, wherein the printing step comprises the steps of:
preparing a plate making film for printing the shielding partition walls ;
preparing a printing plate using the plate making film; and
printing the shielding partition walls on one or both surfaces of the first or second film layer using the printing plate so as to form the blind layer.

23. The method of claim 20 or 21, wherein the plate making film of the shielding partition walls has a resolution of 20,000 dpi or more and a dot line number of 400 line or more.

24. The method of claim 20 or 21, wherein the printing step is performed by a fine precision UV coating process, a one-stop roll-to-roll printing process, an electronic printing process, a fine printing process, a flat screen coating process, a roll screen printing process, a PCB screen printing process, an offset printing process, a gravure printing process or a roller printing process.

25. The method of claim 24, wherein the electronic printing process and the fine printing process are performed by applying a pigment directly to the film the film using a fine coating nozzle.

26. The method of claim 20 or 21, wherein the printing step is carried out at a temperature of 10∼35 °C and a humidity of 15∼65%.

27. The method of claim 20 or 21, wherein the step of preparing the first or second film layer comprises a primer coating step in which a primer coating material consisting of 10∼60 wt% of an urethane or silica resin and 90∼40 wt% of a solvent selected from among bimethyl formamide(BMF), methyl ethyl ketone(MEK) and toluene is coated on a portion or entire of the film material to increase the tension of the film material.

28. The method of claim 27, wherein the primer coating step is carried out using a flat silk screen coating process, a "one-stop roll-to-roll" coating process, a spray coating process, a gravure coating process, a UV coating process, or a roller coating process.

29. The method of claim 20 or 21, further comprising the steps of:
laminating on the second film layer at least one of a third film layer, a polarizing film and a protective film;
drying and curing the laminated layer;
cooling the dried and cured layer; and
subjecting the cooled layer to a Thomson and cutting process.

30. The method of claim 29, wherein the laminating step further comprises laminating one or more selected from the group consisting of an anti-reflection coating layer, an anti-static coating layer, an anti-radiation coating layer, a UV blocking coating layer, an anti-scratch layer, a neutral density filter coating layer and a line polarizer layer.

31. The method of claim 20 or 21, wherein the light-absorbing color ink further comprises one or more components selected from among components having anti-reflection function, an anti-static function, anti-radiation function, UV blocking function, anti-scratch function, clearness improving function, and line polarizer function.

32. The method of claim 20 or 21, further comprising a step of simultaneously or sequentially coating two or more components selected from among components having anti-reflection function, an anti-static function, anti-radiation function, UV blocking function, anti-scratch function, clearness improving function, and line polarizer function.

33. A method for manufacturing a security screen, the method comprising the steps of:
preparing a plate making film for printing shielding partition walls that block an input image;
preparing a printing plate using the plate making film;
printing shielding partition walls on a carrier sheet using the printing plate;
placing on one or both surfaces of a first film layer the shielding partition walls formed on the carrier sheet, and
heating and pressing the first film layer and the carrier sheet to transfer the shielding partition walls to the surface of the first film layer, thereby forming a blind layer.

34. The method of claim 33, further comprising the steps of:
preparing a second film layer;
repeatedly printing a light-absorbing color ink onto one or both surface of the second film layer to form a blind layer comprising shielding partition walls that block an input image, such that the shielding partition walls of the second film layer are formed in the same pattern as the shielding partition walls formed on the first film layer; and
laminating the blind layer of the second film layer on the blind layer of the first layer such that the shielding partition walls of the second layer overlap with the shielding partition walls of the first layer.
